# EUROPEAN PATENT APPLICATION

(11) **EP 4 734 483 A1**
(43) Date of publication of application: **29.04.2026**
(21) Application number: 24842135.6
(22) Date of filing: 18.06.2024
(51) Int. Cl.: H04L 67/06

(54) **OBJECT DOWNLOADING METHOD, DEVICE AND SYSTEM, CLUSTER AND MEDIUM**

(30) Priority: 17.07.2023 CN 202310876409; 06.11.2023 CN 202311470739
(71) Applicant: Huawei Cloud Computing Technologies Co., Ltd., Guiyang, Guizhou, 550025 (CN)
(72) Inventor: XU, Ruohang, Guiyang, Guizhou 550025 (CN); BAI, Pingchang, Guiyang, Guizhou 550025 (CN); XU, Feng, Guiyang, Guizhou 550025 (CN)
(74) Representative: Goddar, Heinz J.
(86) International application number: PCT/CN2024/099955
(87) International publication number: WO 2025/016136

(57) **Abstract**

This application provides an object download method, a device, a system, a cluster, and a medium. The method includes: A first client sends a first seed obtaining request to an object storage service on a first server, where the first seed obtaining request is used to request a seed file of a target object; the first server sends the seed file to the first client based on the first seed obtaining request; the first client sends a first multi-source download provider obtaining request to a second server based on the seed file, where the first multi-source download provider obtaining request is used to request to provide a list of at least one client that downloads the target object; the second server sends a first multi-source download provider list to the first client based on the first multi-source download provider obtaining request; and the first client receives a first part that is of the target object and that is sent by the first server, and receives a second part that is of the target object and that is sent by the second client, thereby improving a download speed.

## Description

This application claims priority to Chinese Patent Application No. 202310876409.9, filed with the China National Intellectual Property Administration on July 17, 2023, and entitled "OBJECT DOWNLOAD METHOD, APPARATUS, AND ANOTHER DEVICE", and claims priority to Chinese Patent Application No. 202311470739.4, filed with the China National Intellectual Property Administration on November 6, 2023, and entitled "OBJECT DOWNLOAD METHOD, DEVICE, SYSTEM, CLUSTER, AND MEDIUM", which are incorporated herein by reference in their entireties.

### TECHNICAL FIELD

The present invention relates to the storage field, and in particular, to an object download method, a device, a system, a cluster, and a medium.

### BACKGROUND

With the rapid development of the internet, object storage is widely used in various internet scenarios to provide massive, secure, low-cost, and highly reliable unstructured storage services. However, in current object storage, a same object can be accessed only by initiating a plurality of requests for the same object. In this case, pressure on an object storage server may be extremely high. Once the object storage server is faulty, an object cannot be downloaded, or even an object is lost. Alternatively, to ensure download experience of a user, a service provider needs to incur significant costs. As a result, high-performance and low-overhead support cannot be provided in scenarios such as live streaming and video-on-demand, concurrent image building of cloud services, and AI training.

### SUMMARY

This application provides an object download method, a device, a system, a cluster, and a medium, to download a target object from a plurality of download sources, thereby improving a download speed.

According to a first aspect, an object download method is provided. The method is applied to an object storage system. The object storage system includes a first client, a second client, a first server, and a second server. An object storage service is deployed on the first server, and the first server and the second server are a same server or different servers.

The first client sends a first seed obtaining request to the object storage service on the first server. Correspondingly, the first server receives the first seed obtaining request sent by the first client. The first seed obtaining request is used to request a seed file of a target object; and the target object is an object stored in the first server. The first server sends the seed file to the first client based on the first seed obtaining request. Correspondingly, the first client receives the seed file sent by the first server based on the first seed obtaining request.

The second client sends a second seed obtaining request to the object storage service on the first server. Correspondingly, the first server receives the second seed obtaining request sent by the second client. The second seed obtaining request is used to request the seed file of the target object. The first server sends the seed file to the second client based on the second seed obtaining request. Correspondingly, the second client receives the seed file sent by the first server based on the second seed obtaining request.

The first client sends a first multi-source download provider obtaining request to the second server based on the seed file. Correspondingly, the second server receives the first multi-source download provider obtaining request sent by the first client based on the seed file. The second server sends a first multi-source download provider list to the first client based on the first multi-source download provider obtaining request. Correspondingly, the first client receives the first multi-source download provider list sent by the second server based on the first multi-source download provider obtaining request. The first multi-source download provider obtaining request is used to request to provide a list of at least one client that downloads the target object. For example, the list may include the second client.

The second client sends a second multi-source download provider obtaining request to the second server based on the seed file. Correspondingly, the second server receives the second multi-source download provider obtaining request sent by the second client based on the seed file. The second server sends a second multi-source download provider list to the second client based on the second multi-source download provider obtaining request. Correspondingly, the second client receives the second multi-source download provider list sent by the second server based on the second multi-source download provider obtaining request. The second multi-source download provider obtaining request is used to request to provide the list of the at least one client that downloads the target object. For example, the list may include the first client.

The first client receives a first part that is of the target object and that is sent by the first server, and the second client receives a second part that is of the target object and that is sent by the first server.

The first client sends a first download request to the second client based on the first multi-source download provider list. Correspondingly, the second client receives the first download request sent by the first client based on the first multi-source download provider list. The second client sends the second part that is of the target object to the first client. Correspondingly, the first client receives the second part that is of the target object and that is sent by the second client.

In the foregoing solution, the object is divided into a plurality of parts, after the second client downloads the second part that is of the object, the first client may download the first part that is of the object from the first server and download the second part that is of the object from the second client. Therefore, the object is downloaded from a plurality of sources, and an object download speed is improved. In addition, even the first server is faulty, the object can still be downloaded from another client, thereby reducing a risk that the object cannot be downloaded since the first server is faulty. In this case, active-active backup may not need to be performed on the first server, thereby reducing costs.

In some possible designs, to ensure data security, before sending the first part that is of the target object to the second client, the first client further needs to perform verification on the second client. Similarly, before sending the second part that is of the target object to the first client, the second client also needs to perform verification on the first client. When authentication on the first client succeeds, the second server sends a first token to the first client. When authentication on the second client succeeds, the second server sends a second token to the second client.

The first client sends the first token to the second client. Correspondingly, the second client receives the first token sent by the first client. The second client sends the first token to the second server. Correspondingly, the second server receives the first token sent by the second client. The second server performs verification on the first token, and sends a first verification success message to the second client when the verification succeeds. Correspondingly, the second client receives the first verification success message sent by the second server. The second client sends the second part that is of the target object to the first client only after receiving the first verification success message.

The second client sends the second token to the first client. Correspondingly, the first client receives the second token sent by the second client. The first client sends the second token to the second server. Correspondingly, the second server receives the second token sent by the first client. The second server performs verification on the second token, and sends a second verification success message to the second client when the verification succeeds. Correspondingly, the second client receives the second verification success message sent by the second server. The second client sends the first part that is of the target object to the first client only after receiving the second verification success message.

In the foregoing solution, because in a conventional object storage system, a one-to-one relationship exists between a client and a first server, the relationship is simple, and complex verification does not need to be performed. However, in this application, a relationship between members in the system is very complex. In addition to downloading data from the first server, the client may further download data from another client. Therefore, verification needs to be performed on an identity of the client before data sending.

In some possible designs, the first server is configured to grant the first client first permission for obtaining the seed file and second permission for obtaining the target object. Similarly, the first server is configured to grant the second client the first permission for obtaining the seed file and the second permission for obtaining the target object, where the first permission is lower than the second permission.

In the foregoing solution, because a confidentiality level of data included in the seed file is lower than a confidentiality level of the target object, the first permission for obtaining the seed may be lower than the second permission for obtaining the target object.

In some possible designs, the first server includes a metadata server and a user data server. The target object includes metadata and user data, where the metadata is stored in an object storage device managed by the metadata server, and the user data is stored in an object storage device managed by the user data server. In this case, after receiving the first seed obtaining request, the first server obtains the metadata of the target object from the metadata server. Then, the first server generates the seed file for the target object based on the metadata of the target object. Therefore, the generated seed file includes the metadata of the target object. Therefore, when the second client sends the second seed obtaining request to the first server, the seed file sent by the first server to the second client includes the metadata of the target object. The second client only needs to download the user data of the target object. Therefore, a download delay can be effectively reduced. The first server and the second server herein may be different servers in a same region, or may be different servers in different regions.

In some possible designs, the first server creates the seed file for the target object based on the seed obtaining request, and sends the seed file to the first client.

In some possible designs, the second server performs authentication on the first client based on the first multi-source download provider obtaining request, and sends the first multi-source download provider list to the first client when the authentication on the first client succeeds. The second server performs authentication on the second client based on the second multi-source download provider obtaining request, and sends the second multi-source download provider list to the second client when the authentication on the second client succeeds. The first multi-source download provider list and the second multi-source download provider list herein may be the same or may be different.

According to a second aspect, an object storage system is provided. The object storage system includes a first client, a second client, a first server, and a second server. An object storage service is deployed on the first server, and the first server and the second server are a same server or different servers.

The first client is configured to send a first seed obtaining request to the object storage service on the first server. Correspondingly, the first server is configured to receive the first seed obtaining request sent by the first client. The first seed obtaining request is used to request a seed file of a target object; and the target object is an object stored in the first server. The first server is configured to send the seed file to the first client based on the first seed obtaining request. Correspondingly, the first client is configured to receive the seed file sent by the first server based on the first seed obtaining request.

The second client is configured to send a second seed obtaining request to the object storage service on the first server. Correspondingly, the first server is configured to receive the second seed obtaining request sent by the second client. The second seed obtaining request is used to request the seed file of the target object. The first server is configured to send the seed file to the second client based on the second seed obtaining request. Correspondingly, the second client is configured to receive the seed file sent by the first server based on the second seed obtaining request.

The first client is configured to send a first multi-source download provider obtaining request to the second server based on the seed file. Correspondingly, the second server is configured to receive the first multi-source download provider obtaining request sent by the first client based on the seed file. The second server is configured to send a first multi-source download provider list to the first client based on the first multi-source download provider obtaining request. Correspondingly, the first client is configured to receive the first multi-source download provider list sent by the second server based on the first multi-source download provider obtaining request. The first multi-source download provider obtaining request is used to request to provide a list of at least one client that downloads the target object. For example, the list may include the second client.

The second client is configured to send a second multi-source download provider obtaining request to the second server based on the seed file. Correspondingly, the second server is configured to receive the second multi-source download provider obtaining request sent by the second client based on the seed file. The second server is configured to send a second multi-source download provider list to the second client based on the second multi-source download provider obtaining request. Correspondingly, the second client is configured to receive the second multi-source download provider list sent by the second server based on the second multi-source download provider obtaining request. The second multi-source download provider obtaining request is used to request to provide the list of the at least one client that downloads the target object. For example, the list may include the first client.

The first client is configured to receive a first part that is of the target object and that is sent by the first server, and the second client is configured to receive a second part that is of the target object and that is sent by the first server.

The first client is configured to send a first download request to the second client based on the first multi-source download provider list. Correspondingly, the second client is configured to receive the first download request sent by the first client based on the first multi-source download provider list. The second client is configured to send the second part that is of the target object to the first client. Correspondingly, the first client is configured to receive the second part that is of the target object and that is sent by the second client.

In some possible designs, before sending the first part that is of the target object to the second client, the first client is configured to perform verification on the second client. Similarly, before sending the second part that is of the target object to the first client, the second client is configured to perform verification on the first client. The second server is configured to: send a first token to the first client when authentication on the first client succeeds; and send a second token to the second client when authentication on the second client succeeds.

The first client is configured to send the first token to the second client. Correspondingly, the second client is configured to receive the first token sent by the first client. The second client is configured to send the first token to the second server. Correspondingly, the second server is configured to receive the first token sent by the second client. The second server is configured to perform verification on the first token, and send a first verification success message to the second client when the verification succeeds. Correspondingly, the second client is configured to receive the first verification success message sent by the second server. The second client is configured to: after receiving the first verification success message, send the second part that is of the target object to the first client.

The second client is configured to send the second token to the first client. Correspondingly, the first client is configured to receive the second token sent by the second client. The first client is configured to send the second token to the second server. Correspondingly, the second server is configured to receive the second token sent by the first client. The second server is configured to perform verification on the second token, and send a second verification success message to the second client when the verification succeeds. Correspondingly, the second client is configured to receive the second verification success message sent by the second server. The second client is configured to: after receiving the second verification success message, send the first part that is of the target object to the first client.

In some possible designs, the first server is configured to grant the first client first permission for obtaining the seed file and second permission for obtaining the target object. Similarly, the first server is configured to grant the second client the first permission for obtaining the seed file and the second permission for obtaining the target object, where the first permission is lower than the second permission.

In some possible designs, the first server includes a metadata server and a user data server. The target object includes metadata and user data, where the metadata is stored in an object storage device managed by the metadata server, and the user data is stored in an object storage device managed by the user data server. In this case, after receiving the first seed obtaining request, the first server obtains the metadata of the target object from the metadata server, and then generates the seed file for the target object based on the metadata of the target object. Therefore, the generated seed file includes the metadata of the target object. Therefore, when the second client sends the second seed obtaining request to the first server, the seed file sent by the first server to the second client includes the metadata of the target object. The second client only needs to download the user data of the target object. Therefore, a download delay can be effectively reduced. The first server and the second server herein may be different servers in a same region, or may be different servers in different regions.

In some possible designs, the first server is configured to create the seed file for the target object based on the seed obtaining request, and send the seed file to the first client.

In some possible designs, the second server is configured to perform authentication on the first client based on the first multi-source download provider obtaining request, and send the first multi-source download provider list to the first client when the authentication on the first client succeeds. The second server is configured to perform authentication on the second client based on the second multi-source download provider obtaining request, and send the second multi-source download provider list to the second client when the authentication on the second client succeeds. The first multi-source download provider list and the second multi-source download provider list herein may be the same or may be different.

According to a third aspect, a first client is provided. The first client belongs to an object storage system, the object storage system further includes a second client, a first server, and a second server, an object storage service is deployed on the first server, the first server and the second server are a same server or different servers, and the first client includes:
a sending unit, configured to send a first seed obtaining request to the object storage service on the first server, where the first seed obtaining request is used to request a seed file of a target object; and
a receiving unit, configured to receive the seed file sent by the first server based on the first seed obtaining request, where
the sending unit is configured to send a first multi-source download provider obtaining request to the second server based on the seed file, where the first multi-source download provider obtaining request is used to request to provide, for the first client, a list of clients that are capable of performing multi-source download on the target object;
the receiving unit is configured to receive a first multi-source download provider list sent by the second server based on the first multi-source download provider obtaining request, where the first multi-source download provider list includes the second client; and
the receiving unit is configured to receive a first part that is of the target object and that is sent by the first server, and receive a second part that is of the target object and that is sent by the second client.

According to a fourth aspect, a first server is provided. The first server belongs to an object storage system, the object storage system further includes a first client, a second client, and a second server, an object storage service is deployed on the first server, the first server and the second server are a same server or different servers, and the first server includes:
a receiving unit, configured to receive a first seed obtaining request sent by the first client, where the first seed obtaining request is used to request a seed file of a target object, where
the receiving unit is further configured to receive a second seed obtaining request sent by the second client, where the second seed obtaining request is used to request the seed file of the target object; and
a sending unit, configured to separately send the seed file to the first client and the second client, where
the sending unit is further configured to send a first part that is of the target object to the first client; and
the sending unit is further configured to send a second part that is of the target object to the second client.

According to a fifth aspect, a second server is provided. The second server belongs to an object storage system, the object storage system further includes a first client, a second client, and a first server, an object storage service is deployed on the first server, the first server and the second server are a same server or different servers, and the second server includes:
a receiving unit, configured to receive a seed file of a target object sent by the first server, and establish a multi-source download provider list based on the seed file, where
the receiving unit is further configured to receive a first multi-source download provider obtaining request sent by the first client, and add the first client to the multi-source download provider list, where the first multi-source download provider obtaining request is used to request to provide, for the first client, a list of clients that are capable of downloading the target object; and
a sending unit, configured to send a first multi-source download provider list to the first client based on the first multi-source download provider obtaining request, where the first multi-source download provider list includes the second client, and the first multi-source download provider list belongs to the multi-source download provider list.

According to a sixth aspect, a computer device is provided. The computer device includes a memory, a processor, and a computer program that is stored in the memory and executable on the processor, and when executing the computer program, the processor implements the steps performed from any perspective of the first client, the second client, the first server, and the second server in the first aspect.

According to a seventh aspect, a computing cluster is provided. The computing cluster includes a plurality of computer devices, each of the plurality of computer devices includes a memory, a processor, and a computer program that is stored in the memory and executable on the processor, and when executing the computer program, the processor implements the steps performed from any perspective of the first server or the second server in the first aspect.

According to an eighth aspect, a computer program product including instructions is provided. When the instructions are executed by a computing device cluster, the computing device cluster is caused to perform the steps performed from any perspective of the first server or the second server in the first aspect.

According to a ninth aspect, a computer-readable storage medium is provided. The computer-readable storage medium stores computer instructions, and when the computer instructions are executed on a computer device, the computer device is caused to perform the steps performed from any perspective of the client, the first server, or the second server in the first aspect according to the claims.

### BRIEF DESCRIPTION OF DRAWINGS

To describe the technical solutions in embodiments of the present invention or in the background more clearly, the following describes the accompanying drawings required for describing embodiments of the present invention or the background.
FIG. 1 is a diagram of a structure of object storage according to this application;
FIG. 2 is a diagram of a structure of an object storage system according to this application;
FIG. 3 is a diagram of an object storage server according to this application;
FIG. 4 is a schematic flowchart of an object download method according to this application;
FIG. 5 is a diagram of a structure of an object storage system according to this application;
FIG. 6 is a diagram of a structure of a computing device according to this application;
FIG. 7 is a diagram of a structure of a computing cluster according to this application; and
FIG. 8 is a diagram of a structure of another computing cluster according to this application.

### DESCRIPTION OF EMBODIMENTS

The following describes embodiments of the present invention with reference to the accompanying drawings in embodiments of the present invention. Terms used in an implementation part of the present invention are merely intended to explain specific embodiments of the present invention, and are not intended to limit the present invention.

An object (object) is mainly unstructured data similar to movies, office documents, images, and the like.

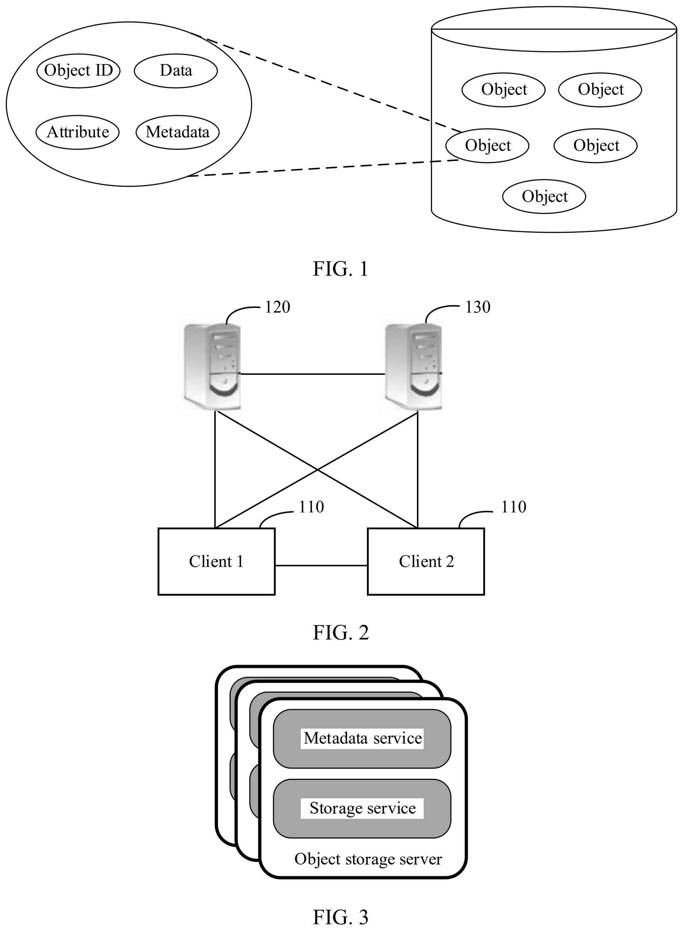

An object storage service (object storage service, OBS) is a manner of storing the unstructured data similar to movies, office documents, images, and the like. Object storage provides a scalable, self-managed, protected, and shareable storage solution. The object storage uses flat address space to store data, and this address space has no hierarchy of directories and files. Therefore, an object storage system can store a large quantity of objects. As shown in FIG. 1, an object may include user data, related metadata (such as a size, a date, and an owner), and other attributes (such as an access characteristic) of the data. Each object is identified by a unique ID, and the unique ID is referred to as an object ID. The object ID is generated by using a dedicated algorithm (such as a data hash value) to ensure that each object ID is unique.

An object storage device (object-based storage device, OSD) is a device that stores objects. A low-cost and high-density storage device (for example, a hard disk) is usually used as the object storage device to store objects. When a larger capacity is required, more hard disks may be added to the object storage device.

FIG. 2 is a diagram of a structure of an object storage system according to this application. As shown in FIG. 2, the object storage system in this embodiment includes: a plurality of clients 110, a first server 120, and a second server 130.

The client 110 is a software tool or library configured to interact with a server, and provides an application programming interface (application programming interface, API) or a command-line tool, so that a user can perform basic operations such as upload, download, delete, copy, and rename, and manage a bucket (bucket) and data stored in an OSD. A first client may be an OBS client. In addition, to implement multi-source download of an object, on the basis of an original function of the OBS client, functions related to the multi-source download may be newly added, for example, functions such as obtaining a seed file and running the seed file. The multi-source download means that an object may be further downloaded through another client in addition to the server.

The first server 120 is a server that can run an operating system of the OSD and provide data storage, obtaining, and management services. As shown in FIG. 3, the first server 120 serves as an object storage server to provide two main services: a metadata service and a storage service. When receiving unstructured data to be stored, the object storage server divides the unstructured data into two parts: user data and metadata. Then, a dedicated algorithm is used to generate an object ID, and the algorithm is for generating a unique object ID based on content of the user data. To facilitate subsequent access, the object storage server uses the metadata service to store the metadata and the object ID, and uses the storage service to store the user data (object) in the object storage device. After the foregoing content is successfully stored, the stored content may be obtained by using the object ID. Object storage is usually a cloud service. To cause the object storage to automatically adjust a resource scale of the object storage as required to meet requirements of different workloads, provide sufficient flexibility and scalability, and cope with changing requirements and a traffic peak, the user data and the metadata are usually stored separately, or the user data and the metadata are even stored far away from each other. For example, the user data is stored in Beijing, and the metadata is stored in Guangzhou. To implement multi-source download of an object, on the basis of a function of an OBS server, functions related to the multi-source download may be newly added to the first server 120, for example, generating a seed file of the object, releasing the seed file to the second server 130, granting the client 110 permission for downloading the seed file, and downloading the object in a multi-source download manner (which are described in detail below).

The second server 130 is usually configured to manage multi-source download providers. Specifically, the second server 130 is configured to: register information about the multi-source download providers, where when joining the object storage system, the client 110 registers information about the client 110 with the second server 130, including an internet protocol (internet protocol, IP) address, a port number, and the like; maintain a multi-source download provider list, where in other words, the second server 130 maintains information about all participants participating in multi-source download of an object; and provide the multi-source download provider list, where in other words, when the client 110 wants to download a specific file, the client may request the multi-source download provider list from the second server 130. The second server 130 returns information about another client 110 for the object in the object storage system, to help the client 110 (that is, a downloader) establish a connection and start downloading; and tracks a download progress. In other words, the second server 130 tracks the download progress of the downloader, and notifies the another client 110 of the download progress, to help the downloader select a proper client 110 for downloading. The second server 130 may add an object processing function on the basis of a tracker (tracker) server.

In the object storage system shown in FIG. 2, only two clients 110, one first server 120, and one second server 130 are used as an example for description. During actual application, there may be three or more clients 110, there may be two or more first servers 120, and there may be two or more second servers 130. In addition, the first server and the second server may be combined into one server.

In addition, the client, the first server, and the second server may be located in a same cloud; the client and the first server may be located in a same cloud, and the second server is located in another cloud; the client is located in a cloud, and the first server and the second server are located in another cloud; or the client, the first server, and the second server are respectively located in different clouds.

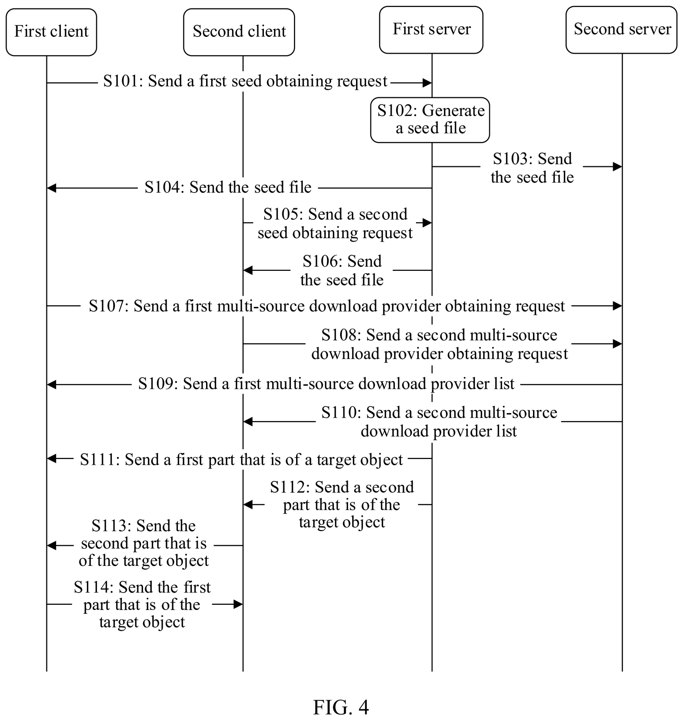

FIG. 4 is a schematic flowchart of an object download method according to this application. As shown in FIG. 4, the object download method provided in this application includes the following steps.

Step S101: A first client sends a first seed obtaining request to a first server. Correspondingly, the first server receives the first seed obtaining request sent by the first client.

In a specific embodiment, the first client may be the client 110 in the embodiment shown in FIG. 2, and the first server may be the first server 120 in the embodiment shown in FIG. 2. For details, refer to FIG. 2 and descriptions of related embodiments. Details are not described herein again.

In a specific embodiment, the first seed obtaining request is used to request a seed file of a target object. The target object is one or more objects in the first server.

Step S102: The first server generates the seed file for the target object based on the first seed obtaining request.

In a specific embodiment, the seed file includes metadata of one or more files such as an object ID, an object size, an object hash value, and a uniform resource locator (uniform resource locator, URL) of a second server. The object ID is a unique identifier of the target object to be downloaded by the first client. The object size is a data amount of the target object. For example, the object size is 1 Gibibyte (GiB) or the like. The object hash value is a value obtained by performing a hash operation on the target object, and is used to verify integrity of a downloaded object to ensure that the downloaded target object is consistent with an original object. The URL of the second server is used to identify and locate the second server, and the first client may access the second server based on the URL of the second server. Optionally, the seed file further includes metadata of an object.

In a specific embodiment, in addition to generating the seed file, the first server may further divide the target object into a plurality of parts, where each part may be referred to as a block. When division is performed on the target object, the blocks obtained through division may be blocks with equal sizes, or may be blocks with different sizes. This is not specifically limited herein. When the target object is divided into blocks with different sizes, a large block may be sent to a client with a sufficient bandwidth, and a small block may be sent to a client with a limited bandwidth, thereby improving an overall download effect of an entire network. In addition, different objects may be divided in different manners. For example, an object A may be divided into a plurality of blocks in a unit of 256 kilobits, and an object B may be divided into blocks in a unit of 128 kilobits.

Step S103: The first server sends the seed file to the second server. Correspondingly, the second server receives the seed file sent by the first server.

In a specific embodiment, after receiving the seed file sent by the first server, the second server establishes a multi-source download provider list for the object in the first server. The multi-source download provider list may include the object ID, an IP address of a client, and the like. In addition, the multi-source download provider list may further include one or more of a port number of the client, an upload speed of the client, a download speed of the client, a connection state (for example, a connected state, a disconnected state, or a connecting state), the object size, the object hash value, and the like. The multi-source download provider list may change. To be specific, when a client exits the object storage system, the client may be deleted from the multi-source download provider list; and when a client joins the object storage system, the client may be added to the multi-source download provider list. In addition, to save resources, when the multi-source download provider list is not used for a long time, the second server may delete the multi-source download provider list.

Step S104: The first server sends the seed file to the first client. Correspondingly, the first client receives the seed file sent by the first server.

In a specific embodiment, the first server sends the seed file to the first client only when verification on the first client succeeds. The first server performs verification on the first client to ensure that only a trusted client can access, use, or interact with the first server, prevent an unauthorized client from accessing the first server, and protect security and confidentiality of the seed file and the object. A verification manner may include one or more of identifier verification, certificate verification, token verification, and the like. The identifier verification may be performing verification on a serial number, a media access control (media access control, MAC) address, an international mobile equipment identity (international mobile equipment identity, IMEI) number, and the like of a client, to prevent using a forged or invalid client for accessing. The certificate verification may be performing verification on one or more of a public key of the client, identity information and a digital signature of the client, and the like, to ensure validity of the client by using validity and integrity of a certificate. The token verification is performing verification on one or more of a specific key, an access token, a client token, or the like, to confirm an identity and permission of the client.

In a specific embodiment, to ensure security of object storage, the first server sends the seed file to the first client only when the first client definitely has permission for obtaining the seed file. A level of the permission for obtaining the seed file may be any one of an object bucket level, an object level, or the like. A type of the permission for obtaining the seed file may be public read, private, or the like. Definitely, in addition to the foregoing mentioned level and type of the permission for obtaining the seed file, the first server may further manage, in a fine-grained manner by using an access control policy, the permission for obtaining the seed file. The access control policy is a policy language-based permission definition manner, and a more complex permission rule may be defined as required. A user may freely select a setting mode, a level, and a type of the permission as required.

Step S105: A second client sends a second seed obtaining request to the first server. Correspondingly, the first server receives the second seed obtaining request sent by the second client.

In a specific embodiment, the second client may be the client 110 in the embodiment shown in FIG. 2. For details, refer to FIG. 2 and descriptions of related embodiments. Details are not described herein again.

In a specific embodiment, the second seed obtaining request is used to request the seed file of the target object.

Step S106: The first server sends the seed file to the second client. Correspondingly, the second client receives the seed file sent by the first server.

In a specific embodiment, when the first client sends the first seed obtaining request to the first server, the first server has generated the seed file. Therefore, when the second client sends the second seed obtaining request to the first server, the first server determines that the seed file has been generated for the target object, so that the first server directly sends the generated seed file to the second client and does not need to generate the seed file again.

In a specific embodiment, the first server sends the seed file to the second client only when the second client also definitely has permission for obtaining the seed file. For content of the permission for obtaining the seed file, refer to the foregoing descriptions. Details are not described herein again. The level of the permission of the first client for obtaining the seed file and a level of the permission of the second client for obtaining the seed file may be the same or may be different. The type of the permission of the first client for obtaining the seed file and a type of the permission of the second client for obtaining the seed file may be the same or may be different. The access control policy of the permission of the first client for obtaining the seed file and an access control policy of the permission of the second client for obtaining the seed file may be the same or may be different.

In a specific embodiment, the first server sends the seed file to the second client only when verification on the second client succeeds. A manner in which the first server verifies the second client is basically similar to the manner in which the first server verifies the first client, and details are not described herein again.

Step S107: The first client sends a first multi-source download provider obtaining request to the second server based on the seed file. Correspondingly, the second server receives the first multi-source download provider obtaining request sent by the first client based on the seed file.

In a specific embodiment, because the seed file records the URL of the second server, the first client may locate the second server based on the URL of the second server, to implement communication between the first client and the second server.

In a specific embodiment, the first multi-source download provider obtaining request is used to obtain a list of clients that downloads the object.

In a specific embodiment, when receiving the first multi-source download provider obtaining request, the second server adds the first client to the multi-source download provider list.

Step S108: The second client sends a second multi-source download provider obtaining request to the second server based on the seed file. Correspondingly, the second server receives the second multi-source download provider obtaining request sent by the second client based on the seed file.

In a specific embodiment, because the seed file records the URL of the second server, the second client may locate the second server based on the URL of the second server, to implement communication between the second client and the second server.

In a specific embodiment, the second multi-source download provider obtaining request is used to obtain the list of the clients that downloads the object.

In a specific embodiment, when receiving the second multi-source download provider obtaining request, the second server adds the second client to the multi-source download provider list.

Step S109: The second server sends a first multi-source download provider list to the first client. Correspondingly, the first client receives the first multi-source download provider list sent by the second server.

In a specific embodiment, the second server sends the multi-source download provider list to the first client only when verification on the first client succeeds. The second server performs verification on the first client to ensure that only a trusted client can access, use, or interact with the second server, prevent an unauthorized client from accessing the second server, and protect security and confidentiality of the multi-source download provider list.

In a specific embodiment, to ensure security, the second server sends the multi-source download provider list to the first client only when the first client has permission for obtaining the multi-source download provider list. A type of the permission for obtaining the multi-source download provider list may be public read, private, or the like. Definitely, in addition to the foregoing mentioned permission type of the permission for obtaining the multi-source download provider list, the second server may further manage, in a fine-grained manner by using an access control policy, the permission for obtaining the multi-source download provider list.

In a specific embodiment, the second server may send a multi-source download provider list including all multi-source download providers or a multi-source download provider list including a part of multi-source download providers to the first client as the first multi-source download provider list. For example, the part of multi-source download providers are multi-source download providers with a large upload rate and/or a high download speed, and the part of multi-source download providers are multi-source download providers other than the first client in the multi-source download provider list. In a more specific embodiment, the multi-source download provider list includes the second client.

In a specific embodiment, in a case of a high security requirement, in addition to sending the multi-source download provider list to the first client, the second server further needs to send a first token to the first client. The first token is used to authorize the first client to download the target object from the second client. The first token may be a long-term valid token, or may be a short-term valid token. After the first token expires, the first client cannot download the object from the second client.

Step S110: The second server sends a second multi-source download provider list to the second client. Correspondingly, the second client receives the second multi-source download provider list sent by the second server.

In a specific embodiment, the second server sends the multi-source download provider list to the second client only when verification on the second client succeeds. The second server performs verification on the second client to ensure that only a trusted client can access, use, or interact with the second server, prevent an unauthorized client from accessing the second server, and protect the security and the confidentiality of the multi-source download provider list.

In a specific embodiment, to ensure security, the second server sends the multi-source download provider list to the second client only when the second client has permission for obtaining the multi-source download provider list. For specific descriptions of the multi-source download provider list, refer to the foregoing descriptions. Details are not described herein again. A level of the permission of the first client for obtaining the seed file and a level of the permission of the second client for obtaining the seed file may be the same or may be different. The type of the permission of the first client for obtaining the multi-source download provider list and a type of the permission of the second client for obtaining the multi-source download provider list may be the same or may be different. The access control policy of the permission of the first client for obtaining the multi-source download provider list and an access control policy of the permission of the second client for obtaining the multi-source download provider list may be the same or may be different.

In a specific embodiment, the second server may send a multi-source download provider list including all multi-source download providers or a multi-source download provider list including a part of multi-source download providers to the second client. For example, the part of multi-source download providers are multi-source download providers with a large upload rate and/or a high download speed, and the part of multi-source download providers are multi-source download providers other than the second client in the multi-source download provider list. Because the first client first downloads the multi-source download provider list and then the second client downloads the multi-source download provider list, other clients may join or exit the multi-source download provider list during this process. Therefore, the multi-source download provider list downloaded by the first client may be different from the multi-source download provider list downloaded by the second client. In a more specific embodiment, the multi-source download provider list includes the first client.

In a specific embodiment, in a case of a high security requirement, in addition to sending the multi-source download provider list to the second client, the second server further needs to send a second token to the second client. The second token is used to authorize the second client to download the object from the first client. The second token may be a long-term valid token, or may be a short-term valid token. After the second token expires, the second client cannot download the target object from the first client. It may be understood that both the first token and the second token may be long-term valid tokens, or short-term valid tokens; the first token may be a long-term token and the second token may be a short-term token; or the first token may be a short-term token and the second token may be a long-term token.

Step S111: The first server sends a first part that is of the object to the first client. Correspondingly, the first client receives the first part that is of the object and that is sent by the first server.

In a specific embodiment, to ensure security, the first server sends the first part that is of the object to the first client only when the first client has permission for obtaining the object. A level of the permission for obtaining the object may be any one of an object bucket level, an object level, or the like. A type of the permission for obtaining the object may be public read, private, or the like. Definitely, in addition to the foregoing mentioned level and type of the permission for obtaining the object, the first server may further manage, in a fine-grained manner by using an access control policy, the permission for obtaining the object.

In a specific embodiment, because the first server has divided the target object into a plurality of blocks, the first server may select some blocks from the plurality of blocks and send the blocks to the first client. For example, assuming that the first server divides the object into four blocks, the first server may select a first block and a third block from the four blocks and send the first block and the third block to the first client. In a more specific embodiment, selection of blocks to be distributed to the first client may be implemented based on a piece selection (piece selection) algorithm, thereby maximizing a download speed, balancing upload and download, and ensuring file integrity. Alternatively, selection of blocks to be distributed to the first client may be implemented based on a random selection algorithm. To be specific, some blocks are randomly selected from the plurality of blocks and sent to the client without considering a speed difference between clients. Selection of blocks to be distributed to the first client may be implemented based on a scarcity first algorithm. To be specific, some scarce blocks are preferentially selected and sent to the client. For example, if five clients already have blocks A, and only one client has a block B, the block B is preferentially selected for sending. Alternatively, selection of blocks to be distributed to the first client may be implemented based on a high-speed first algorithm. To be specific, a block provided by a client with a high download speed is preferentially selected. Definitely, a block may be selected from the plurality of blocks by combining the foregoing several algorithms. In this way, a decision can be made more scientifically. For example, a decision is made by combining the foregoing several algorithms in a weighting manner.

Step S112: The first server sends a second part that is of the target object to the second client. Correspondingly, the second client receives the second part that is of the target object and that is sent by the first server.

In a specific embodiment, to ensure security, the first server sends the second part that is of the object to the second client only when the second client has permission for obtaining the object. For content of the permission for obtaining the object, refer to the foregoing descriptions. Details are not described herein again. The level of the permission of the first client for obtaining the object and a level of the permission of the second client for obtaining the object may be the same or may be different. The type of the permission of the first client for obtaining the object and a type of the permission of the second client for obtaining the object may be the same or may be different. The access control policy of the permission of the first client for obtaining the object and an access control policy of the permission of the second client for obtaining the object may be the same or may be different.

In a specific embodiment, the first server may select some blocks from the plurality of blocks and send the blocks to the second client. For example, assuming that the first server divides the target object into four blocks, the first server may select a second block and a fourth block from the four blocks and send the second block and the fourth block to the first client. It may be understood that it is assumed herein that completely different blocks are sent to the first client and the second client respectively. However, during actual application, the first block and the third block may be sent to the first client, and the first block and the fourth block may be sent to the second client; or the first block and the third block are sent to the first client, and the first block and the third block are sent to the second client. In other words, the first part that is of the object and the second part that is of the target object may be completely the same, partially the same, or completely different. This is not specifically limited herein.

In a specific embodiment, the permission for obtaining the object and the permission for obtaining the seed file may be different. For example, because a confidentiality requirement of data of the object is higher than a confidentiality requirement of data of the seed file, the permission for obtaining the object may be higher than the permission for obtaining the seed file.

Step S113: The second client sends the second part that is of the target object to the first client. Correspondingly, the first client receives the second part that is of the target object and that is sent by the second client.

In a specific embodiment, if a connection has been established between the first client and the second client, and the connection is not canceled, the second client directly sends the second part that is of the object to the first client. If no connection is established between the first client and the second client, or the connection between the first client and the second client has been canceled, a connection may be established or re-established between the first client and the second client. The second client has obtained the multi-source download provider list, and the multi-source download provider list includes an IP address, a port number, and the like of the first client. Therefore, the second client may locate the first client in the network by using the IP address and the port number of the first client, and establish a network connection to the first client. After the connection between the first client and the second client is established, the first client may send the second part that is of the object to the first client.

In a specific embodiment, before the second client sends the second part that is of the object to the first client, token verification further needs to be performed. Specifically, the first client first sends a first object obtaining request to the second client, where the first object obtaining request carries the first token. The second client receives the first object obtaining request, extracts the first token from the first object obtaining request, and sends the first token to the second server. After receiving the first token, the second server performs verification on the first token, and sends a first verification success message to the second client when the verification succeeds, or sends a first verification failure message to the second client when the verification fails. After receiving the first verification success message, the second client sends the second part that is of the object to the first client. After receiving the first verification failure message, the second client refuses to send the second part that is of the object to the first client.

Step S114: The first client sends the first part that is of the target object to the second client. Correspondingly, the second client receives the first part that is of the target object and that is sent by the first client.

In a specific embodiment, if a connection has been established between the first client and the second client previously, and the connection is not canceled, the first client directly sends the first part that is of the target object to the second client. If no connection is established between the first client and the second client, or the connection between the first client and the second client has been canceled, a connection may be established or re-established between the first client and the second client. The first client has obtained the multi-source download provider list, and the multi-source download provider list includes an IP address, a port number, and the like of the second client. Therefore, the first client may locate the second client in the network by using the IP address and the port number of the second client, and establish a network connection to the second client. After the connection between the first client and the second client is established, the second client may send the first part that is of the target object to the first client. In addition, after sending the first part that is of the target object to the first client by the second client is completed, the connection between the first client and the second client may be canceled, to release network resources.

In a specific embodiment, before the first client sends the first part that is of the object to the second client, token verification further needs to be performed. Specifically, the second client first sends a second object obtaining request to the first client, where the second object obtaining request carries the second token. The first client receives the second object obtaining request, extracts the second token from the second object obtaining request, and sends the second token to the second server. After receiving the second token, the second server performs verification on the second token, and sends a second verification success message to the first client when the verification succeeds, or sends a second verification failure message to the first client when the verification fails. After receiving the second verification success message, the first client sends the first part that is of the target object to the second client. After receiving the second verification failure message, the first client refuses to send the first part that is of the target object to the second client.

In the foregoing embodiment, it is assumed that the first client sends the first block and the third block in the object to the second client, and the second client sends the second block and the fourth block in the object to the first client. However, during actual application, the object storage system usually includes more clients, for example, a third client. Therefore, a more complex case may occur. For example, the first client sends the first part to the second client, and the second client sends the first part to the third client. A case in which the first client sends the first part to the second client and the third client sends the second part to the second client may even occur. In addition, the plurality of blocks downloaded by the first client from the first server may not be all sent to the second client, but only a part of the blocks are selected and sent to the second client. For example, the first client downloads the first block and the third block from the first server, but the first client sends only the third block to the second client. Besides, in addition to sending the blocks downloaded from the first server to the second client, the first client may further send blocks received from another client to the second client. For example, the first client downloads the first block from the first server, and downloads the third block from the third client, and then the first client sends the first block and the third block to the second client. Alternatively, the client may obtain the blocks in the target object only from another client, and does not need to obtain the blocks from the first server. For example, assuming that the first server divides the target object into four blocks, the first server may select a first block and a third block from the four blocks and send the first block and the third block to the first client, and select a second block and a fourth block from the four blocks and send the second block and the fourth block to the second client. The third client obtains the first block and the third block from the first client, and obtains the second block and the fourth block from the second client.

In the foregoing embodiment, an execution sequence of the steps should be determined according to a logical relationship between the execution of the steps, and it should not be understood as that the steps can be performed only according to the execution sequence shown in FIG. 3. For example, steps S105 and S106 may occur before step S102, step S103, or step S104, steps S105 and S106 may occur after step S107, steps S105, S106, and S108 may occur after step S109, steps S105, S106, S108, and S110 may occur after step S111, and steps S105, S106, S108, S110, and S112 may occur after step S113.

In an original object storage system, a relationship between a client and a first server is relatively simple, the client and the first server are in a single-line relationship, and each client has an upload and download relationship only with the first server. Therefore, the first server only needs to simply verify whether the client has download permission. However, compared with the original object storage system, in the object storage system in this application, a relationship between the first server and the client is very complex. In addition to a data upload and download relationship between the first server and the client, a client theoretically has an upload and download relationship with any other client in the object storage system. In such a complex system, it is very important to ensure security of an object and security of the first server and the client. Therefore, in this application, before the first server sends the seed file to the first client and the second client, before the second server sends the multi-source download provider list to the first client and the second client, and before the first server sends data of the object to the first client and the second client, identity authentication, permission confirmation, and the like need to be first performed on the first client and the second client. In addition, before the data of the target object is downloaded between the first client and the second client, authentication also needs to be performed on the tokens, to ensure security of object download.

The metadata of the target object and the user data of the object may be stored in different places. It is assumed that the user data of the target object is stored in Beijing, and the metadata of the target object is stored in Guangzhou. In addition, when a client in Shanghai needs to download the target object, the client needs to first obtain the metadata of the target object from a server in Guangzhou, and then obtain the user data of the target object from a server in Beijing. As a result, a large delay is caused. For example, assuming that a delay of obtaining the metadata of the target object from the server in Guangzhou by the server in Shanghai is 10 seconds, and a delay of obtaining the user data of the target object from the server in Beijing is 1 second, a total delay is 11 seconds. However, if a seed file downloaded by the client includes the metadata of the target object, when the client in Shanghai needs to download the target object, the client only needs to obtain the user data of the target object from the server in Beijing. In the foregoing example, the total delay is 1 second. Therefore, the delay can be greatly reduced, and user experience can be improved. In the foregoing example, it is assumed that the client, the server storing the metadata, and the server storing the user data are respectively located in different regions. During actual application, the client, the server storing the metadata, and the server storing the user data may be partially located in a same region, or all located in a same region.

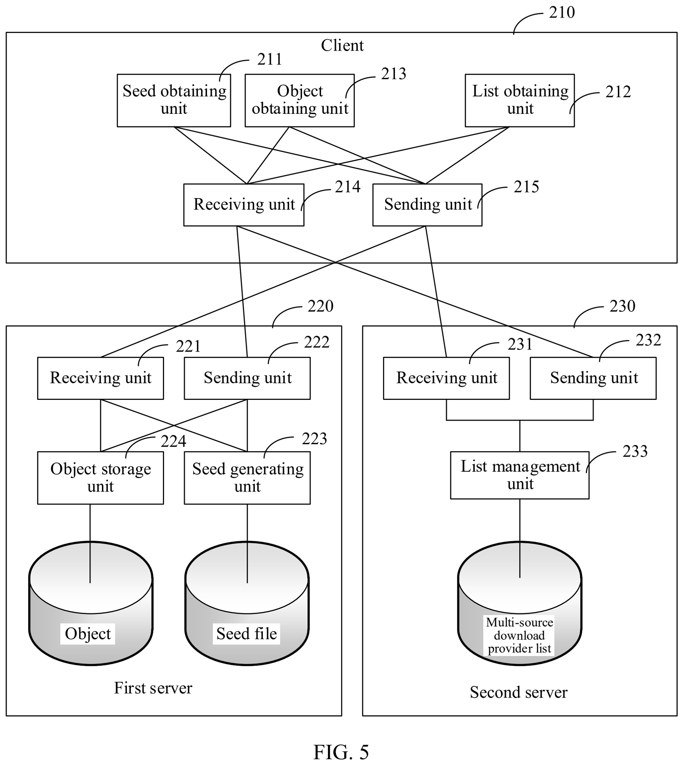

FIG. 5 is a diagram of a structure of an object storage system according to this application. As shown in FIG. 5, the object storage system in this application includes: a client 210, a first server 220, and a second server 230.

The client 210 includes a seed obtaining unit 211, a list obtaining unit 212, an object obtaining unit 213, a receiving unit 214, and a sending unit 215.

The seed obtaining unit 211 is configured to indicate the sending unit 215 to send a seed obtaining request to the first server 220, and receive, through the receiving unit 214, a seed file sent by the first server 220. After obtaining the seed file, the seed obtaining unit 211 notifies the list obtaining unit 212 that a multi-source download provider list needs to be obtained. The seed obtaining unit 211 may be configured to provide the following functions: a seed file searching function, where a user may search for and browse various seed files through keywords; downloading files from a plurality of sources simultaneously, which greatly improves a download speed and efficiency; managing a plurality of download tasks, including setting a download queue, download priorities, and a quantity of tasks to be downloaded simultaneously, so as to better control a download sequence and speed; managing downloaded seed files, including operations such as add, delete, pause, resume, and re-download; and a function of supporting encrypted transmission and anonymous download, to enhance user privacy protection, security, and the like.

The list obtaining unit 212 is configured to indicate the sending unit 215 to send a multi-source download provider obtaining request to the second server 230, and receive, through the receiving unit 214, the multi-source download provider list sent by the second server 230. After obtaining the multi-source download provider obtaining request, the list obtaining unit 212 notifies the object obtaining unit 212 that a target object needs to be obtained.

The object obtaining unit 213 is configured to indicate the receiving unit 214 to receive a part of the target object sent by the first server 220, and receive a part of the target object from another client; or receive the target object from one or more other clients. When receiving the target object from one or more other clients, the object obtaining unit 213 may receive a part of the target object sent by a client A, receive a part of the target object sent by a client B, and the like. The object obtaining unit 213 may have the following functions: uploading a local file to an object storage service on the first server 220; combining parts of the target object that are downloaded from different sources into an object; managing the uploaded target object, including operations such as create, delete, copy, move, and rename; setting access permission of a file, including public read/write, private read/write, and the like, to ensure security and privacy of the file; supporting a plurality of upload manners, including single file upload, batch upload, and resumable upload, to provide more flexible and efficient upload experience; a function of providing data encryption, to encrypt uploaded objects to enhance data security; and a function of supporting data backup and restoration, where the user may back up important data to the object storage service and restore the data when necessary.

The seed obtaining unit 211 may indicate the sending unit 215 to perform the step performed by the first client in step S101 in the object download method shown in FIG. 4, or indicate the sending unit 215 to perform the step performed by the second client in step S105 in the object download method shown in FIG. 4. The seed obtaining unit 211 may indicate the receiving unit 214 to perform the step performed by the first client in step S104 in the object download method shown in FIG. 4, or indicate the receiving unit 214 to perform the step performed by the second client in step S106 in the object download method shown in FIG. 4.

The list obtaining unit 212 may indicate the sending unit 215 to perform the step performed by the first client in step S107 in the object download method shown in FIG. 4, or indicate the sending unit 215 to perform the step performed by the second client in step S108 in the object download method shown in FIG. 4. The list obtaining unit 212 may indicate the receiving unit 214 to perform the step performed by the first client in step S109 in the object download method shown in FIG. 4, or indicate the receiving unit 214 to perform the step performed by the second client in step S110 in the object download method shown in FIG. 4.

The object obtaining unit 213 may indicate the receiving unit 214 to perform the steps performed by the first client in steps S111 and S113 in the object download method shown in FIG. 4, or indicate the receiving unit 214 to perform the steps performed by the second client in steps S112 and S114 in the object download method shown in FIG. 4.

It should be understood that the client in FIG. 5 is an exemplary division manner, and the client 210 may further include more or fewer units. For example, the client 210 may further include a display unit, configured to display the seed file, the multi-source download provider list, or the object. For another example, the seed obtaining unit 211, the list obtaining unit 212, and the object obtaining unit 213 may be combined into one obtaining unit. For another example, the client 210 may not have a display unit. It should be understood that the foregoing examples are used for description. Specifically, units may be determined based on an actual application scenario. This is not specifically limited in this application.

To better understand this application, FIG. 5 shows only an internal structure of one client. Actually, there may be one or more clients, and internal structures of other clients are the same as the internal structure of the client 210 shown in FIG. 5. Details are not described herein again.

The first server 220 includes a receiving unit 221, a sending unit 222, a seed generating unit 223, and an object storage unit 224.

The seed generating unit 223 is configured to receive, through the receiving unit 221, the seed obtaining request sent by the client, generate the seed file for the object, and indicate the sending unit 222 to send the seed file to the second server for management.

The object storage unit 224 is configured to indicate the sending unit 222 to send the seed file to the second server and send the object to the client. The object storage unit may include the following functions: dividing the object into a plurality of parts; storing large-scale data objects and supporting storage and management of massive data; ensuring data security and reliability by using a data redundancy and backup mechanism; providing a high-availability storage service by using a distributed architecture and a data replication mechanism; providing a plurality of access interfaces and protocols, for example, a RESTful API and an S3 API, so that the user may easily access and manage the stored data; and a function of providing data security protection and encryption. The object storage unit may encrypt data for storage to protect data confidentiality. In addition, the object storage unit also provides access control and permission management to ensure that only an authorized user can access and modify data; provides a data management and retrieval function, for example, data classification, indexing, and searching; supports cross-region data replication and backup; and verifies integrity of downloaded data to ensure that a downloaded object is the same as an original object.

The seed generating unit 223 may perform, through the receiving unit 221, the steps performed by the first server in steps S101 and S105 in the object download method shown in FIG. 4, perform step S102 in the object download method shown in FIG. 4, and indicate the sending unit 222 to perform the step performed by the first server in steps S103, S104, and S106 in the object download method shown in FIG. 4.

The object storage unit 224 indicates the sending unit 222 to perform the steps performed by the first server in steps S111 and S112 in the object download method shown in FIG. 4.

It should be understood that the first server 220 in FIG. 5 is an exemplary division manner. The first server 220 may further include more or fewer units. For example, the first server 220 may further include a display unit, configured to display the seed file or the object. For another example, the seed generating unit 223 and the object storage unit 224 may be combined into one obtaining unit. For another example, the first server 220 may not have a display unit. It should be understood that the foregoing examples are used for description. Specifically, units may be determined based on an actual application scenario. This is not specifically limited in this application.

Both the seed generating unit 223 and the object storage unit 224 may be implemented through software or hardware. For example, the following uses the object storage unit 224 as an example to describe an implementation of the object storage unit 224. Similarly, for an implementation of the seed generating unit 223, refer to the implementation of the object storage unit 224.

A module is used as an example of a software functional unit, and the object storage unit 224 may include code run on a computing instance. The computing instance may include at least one of a physical host (a computing device), a virtual machine, and a container. Further, there may be one or more computing instances. For example, the object storage unit 224 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is disposed in one region. A communication gateway needs to be disposed in each VPC for communication between two VPCs in a same region and cross-region communication between VPCs in different regions, to implement interconnection between the VPCs through the communication gateway.

A module is used as an example of a hardware functional unit, and the object storage unit 224 may include at least one computing device, for example, a server. Alternatively, the object storage unit 224 may be a device implemented through an application-specific integrated circuit (application-specific integrated circuit, ASIC) or a programmable logic device (programmable logic device, PLD), or the like. The PLD may be implemented through a complex programmable logical device (complex programmable logical device, CPLD), a field-programmable gate array (field-programmable gate array, FPGA), generic array logic (generic array logic, GAL), or any combination thereof.

The plurality of computing devices included in the object storage unit 224 may be distributed in a same region, or may be distributed in different regions. The plurality of computing devices included in the object storage unit 224 may be distributed in a same AZ, or may be distributed in different AZs. Similarly, the plurality of computing devices included in the object storage unit 224 may be distributed on a same VPC, or may be distributed on a plurality of VPCs. The plurality of computing devices may be any combination of computing devices such as a server, an ASIC, a PLD, a CPLD, an FPGA, and GAL.

It should be noted that, in other embodiments, the object storage unit 224 may be configured to perform any step of the first server in the object download method shown in FIG. 4, the seed generating unit 223 may be configured to perform any step of the first server in the object download method, and the steps that the seed generating unit 223 and the object storage unit 224 are responsible for implementing may be specified as required. The seed generating unit 223 and the object storage unit 224 implement different steps in the object download method to implement all functions of the first server.

The second server 230 includes a receiving unit 231, a sending unit 232, and a list management unit 233.

The list management unit 233 receives the seed file sent by the first server 220 through the receiving unit 231, receives the multi-source download provider obtaining request sent by the client, and indicates the sending unit 232 to send the multi-source download provider list. Functions of the list management unit 233 may include: storing a large quantity of seed files; coordinating data transmission between clients; recording a status and a progress of each download task and providing the information to another client; obtaining an IP address and a port number of another client, to establish a point-to-point data transmission connection; and coordinating data transmission between clients, and scheduling based on an upload and download speed of each client to optimize performance and efficiency of an entire download system.

The list management unit 233 may perform, through the receiving unit 231, the steps performed by the second server in steps S103 and S107 in the object download method shown in FIG. 4, and indicate the sending unit 232 to perform the steps performed by the second server in steps S109 and S110 in the object download method shown in FIG. 4.

It should be understood that the second server 230 in FIG. 5 is an exemplary division manner. The second server 230 may further include more or fewer units. For example, the second server 230 may further include a display unit, configured to display the multi-source download provider list. For another example, the receiving unit 231 and the sending unit 232 may be combined into one obtaining unit. For another example, the second server 230 may not have a display unit. It should be understood that the foregoing examples are used for description. Specifically, units may be determined based on an actual application scenario. This is not specifically limited in this application.

The list management unit 233 may be implemented through software, or may be implemented through hardware. For example, a software implementation or a hardware implementation of the object storage unit 224 is described.

A module is used as an example of a software functional unit, and the list management unit 233 may include code run on a computing instance. The computing instance may include at least one of a physical host (a computing device), a virtual machine, and a container. Further, there may be one or more computing instances. For example, the list management unit 233 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is disposed in one region. A communication gateway needs to be disposed in each VPC for communication between two VPCs in a same region and cross-region communication between VPCs in different regions, to implement interconnection between the VPCs through the communication gateway.

A module is used as an example of a hardware functional unit, and the list management unit 233 may include at least one computing device, for example, a server. Alternatively, the list management unit 233 may be a device implemented through an application-specific integrated circuit (application-specific integrated circuit, ASIC) or a programmable logic device (programmable logic device, PLD), or the like. The PLD may be implemented through a complex programmable logical device (complex programmable logical device, CPLD), a field-programmable gate array (field-programmable gate array, FPGA), generic array logic (generic array logic, GAL), or any combination thereof.

The plurality of computing devices included in the list management unit 233 may be distributed in a same region, or may be distributed in different regions. The plurality of computing devices included in the list management unit 233 may be distributed in a same AZ, or may be distributed in different AZs. Similarly, the plurality of computing devices included in the list management unit 233 may be distributed on a same VPC, or may be distributed on a plurality of VPCs. The plurality of computing devices may be any combination of computing devices such as a server, an ASIC, a PLD, a CPLD, an FPGA, and GAL.

It should be noted that, in other embodiments, the list management unit 233 may be configured to perform any step of the second server in the object download method shown in FIG. 4, and the steps that the list management unit 233 is responsible for implementing may be specified as required.

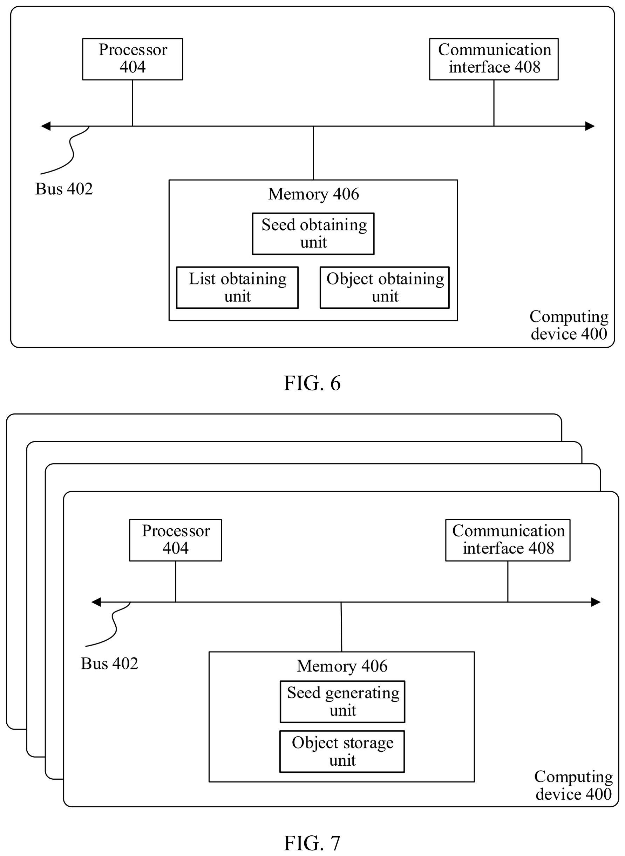

This application further provides a computing device 400. As shown in FIG. 6, the computing device 400 includes a bus 402, a processor 404, a memory 406, and a communication interface 408. The processor 404, the memory 406, and the communication interface 408 communicate with each other through the bus 402. The computing device 400 may be a server or a terminal device. It should be understood that a quantity of processors and a quantity of memories in the computing device 400 are not limited in this application.

The bus 402 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one line in FIG. 6. However, it does not mean that there is only one bus or only one type of bus. The bus 402 may include a path for transmitting information between components (for example, the memory 406, the processor 404, and the communication interface 408) of the computing device 400.

The processor 404 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 406 may include a volatile memory (volatile memory), for example, a random access memory (random access memory, RAM). The processor 404 may further include a non-volatile memory (non-volatile memory), for example, a read-only memory (read-only memory, ROM), a flash memory, a hard disk drive (hard disk drive, HDD), or a solid-state drive (solid-state drive, SSD).

When the computing device is a client, the memory 406 stores executable program code, and the processor 404 executes the executable program code to separately implement functions of the seed obtaining unit, the list obtaining unit, and the object obtaining unit, to implement the steps performed by the client in the object download method. To be specific, the memory 406 stores instructions used to perform the steps performed by the client in the object download method. Alternatively, the memory 406 stores executable code, and the processor 404 executes the executable code to separately implement functions of the client, to implement instructions of the steps performed by the client in the object download method. To be specific, the memory 406 stores instructions used to perform the steps performed by the client in the object download method.

When the computing device is a first server, the memory 406 stores executable program code, and the processor 404 executes the executable program code to separately implement functions of the seed generating unit and the object storage unit, to implement the steps performed by the first server in the object download method. To be specific, the memory 406 stores instructions used to perform the steps performed by the first server in the object download method. Alternatively, the memory 406 stores executable code, and the processor 404 executes the executable code to separately implement functions of the first server, to implement instructions of the steps performed by the first server in the object download method. To be specific, the memory 406 stores instructions used to perform the steps performed by the first server in the object download method.

When the computing device is a second server, the memory 406 stores executable program code, and the processor 404 executes the executable program code to separately implement functions of the list management unit, to implement the steps performed by the second server in the object download method. To be specific, the memory 406 stores instructions used to perform the steps performed by the second server in the object download method. Alternatively, the memory 406 stores executable code, and the processor 404 executes the executable code to separately implement functions of the second server, to implement instructions of the steps performed by the second server in the object download method. To be specific, the memory 406 stores instructions used to perform the steps performed by the second server in the object download method.

The communication interface 408 uses a receiving unit and a sending unit, for example, but not limited to, a network interface card and a transceiver, to implement communication between the computing device 400 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

As shown in FIG. 7, the computing device cluster includes at least one computing device 400. Memories 406 in one or more computing devices 400 in the computing device cluster may store same instructions used to perform the steps performed from any perspective of the first server and the second server in the object download method shown in FIG. 4.

In some possible implementations, the memories 406 of the one or more computing devices 400 in the computing device cluster may alternatively respectively store some instructions used to perform the steps performed from any perspective of the first server and the second server in the object download method. In other words, a combination of one or more computing devices 400 may jointly execute the instructions used to perform the steps performed from any perspective of the first server and the second server in the object download method.

It should be noted that the memories 406 in different computing devices 400 in the computing device cluster may store different instructions, which are respectively used to perform some functions of the first server or the second server. To be specific, the instructions stored in the memories 406 in different computing devices 400 may implement functions of one or more units of the seed generating unit 223 and the object storage unit 224, or implement functions of the list management unit.

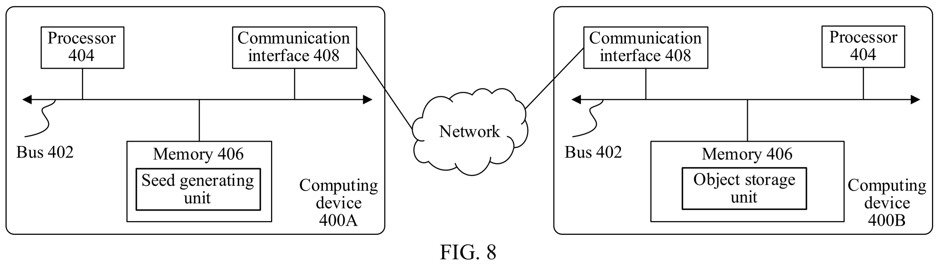

In some possible implementations, the first server is used as an example, and the one or more computing devices in the computing device cluster may be connected through a network. The network may be a wide area network, a local area network, or the like. FIG. 8 shows a possible implementation. As shown in FIG. 8, two computing devices 400A and 400B are connected through a network. Specifically, each computing device is connected to the network through a communication interface in the computing device. In this type of possible implementation, the memory 406 in the computing device 400A stores instructions for performing the functions of the seed generating unit 223 in the first server. In addition, the memory 406 in the computing device 400B stores instructions for performing the functions of the object storage unit 224.

A connection manner of the computing device cluster shown in FIG. 8 may be based on a requirement (for example, storing a large amount of data) of the object download method provided in this application. Therefore, it is considered that the functions implemented by the object storage unit 224 are performed by the computing device 400B.

It should be understood that functions of the computing device 400A shown in FIG. 8 may alternatively be completed by a plurality of computing devices 400. Similarly, functions of the computing device 400B may alternatively be completed by a plurality of computing devices 400.

An embodiment of this application further provides another computing device cluster. For a connection relationship between computing devices in the computing device cluster, refer to the similar connection manners of the computing device cluster in FIG. 7 and FIG. 8. A difference lies in that, memories 406 in one or more computing devices 400 in the computing device cluster may store same instructions used to perform the steps performed by the first server in the object download method.

In some possible implementations, the memories 406 of the one or more computing devices 400 in the computing device cluster may alternatively respectively store some instructions used to perform the first server in the object download method. In other words, a combination of one or more computing devices 400 may jointly execute the instructions used to perform the steps performed by the first server in the object download method.

It should be noted that the memories 406 in different computing devices 400 in the computing device cluster may store different instructions, which are respectively used to perform functions of the first server and the second server. To be specific, the instructions stored in the memories 406 in different computing devices 400 may implement functions of one or more servers in the first server and the second server.

An embodiment of this application further provides a computer program product including instructions. The computer program product may be software or a program product that includes instructions and that can be run on a computing device or can be stored in any usable medium. When the computer program product is run on at least one computing device, the at least one computing device is caused to perform the steps performed by one or more of the client, the first server, or the second server in the object download method shown in FIG. 4.

An embodiment of this application further provide a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the steps performed by one or more of the client, the first server, or the second server in the object download method.

Finally, it should be noted that the foregoing embodiments are merely intended for describing the technical solutions of the present invention, but are not intended to limit the present invention. Although the present invention is described in detail with reference to the foregoing embodiments, a person of ordinary skill in the art should understand that modifications may still be made to the technical solutions recorded in the foregoing embodiments or equivalent replacements may be made to some technical features thereof, and the modifications or replacements do not cause the essence of the corresponding technical solutions to depart from the protection scope of the technical solutions of embodiments of the present invention.

In the foregoing embodiments, the descriptions of each embodiment have respective focuses. For a part that is not described in detail in an embodiment, refer to related descriptions in other embodiments.

## Claims

1. An object download method, wherein the method is applied to an object storage system, the object storage system comprises a first client, a second client, a first server, and a second server, an object storage service is deployed on the first server, the first server and the second server are a same server or different servers, and the method comprises:
sending, by the first client, a first seed obtaining request to the object storage service on the first server, wherein the first seed obtaining request is used to request a seed file of a target object;
sending, by the first server, the seed file to the first client based on the first seed obtaining request;
sending, by the first client, a first multi-source download provider obtaining request to the second server based on the seed file, wherein the first multi-source download provider obtaining request is used to request to provide a list of at least one client that downloads the target object;
sending, by the second server, a first multi-source download provider list to the first client based on the first multi-source download provider obtaining request, wherein the first multi-source download provider list comprises the second client; and
receiving, by the first client, a first part that is of the target object and that is sent by the first server, and receiving a second part that is of the target object and that is sent by the second client.

2. The method according to claim 1, wherein the method further comprises:
sending, by the second server, a first token to the first client when authentication on the first client succeeds; and
before receiving the second part that is of the target object and that is sent by the second client, the method further comprises:
sending, by the first client, the first token to the second client;
sending, by the second client, the first token to the second server;
performing, by the second server, verification on the first token, and sending a first verification success message to the second client when the verification succeeds; and
after receiving the first verification success message, sending, by the second client, the second part that is of the target object to the first client.

3. The method according to claim 2, wherein before sending the second part that is of the target object to the first client, the method further comprises:
sending, by the second client, a second seed obtaining request to the first server, wherein the second seed obtaining request is used to request the seed file of the target object;
running, by the second client, the seed file, and sending a second multi-source download provider obtaining request to the second server, wherein the second multi-source download provider obtaining request is used to request to provide the list of the at least one client that downloads the target object;
performing, by the second server, authentication on the second client based on the second multi-source download provider obtaining request, and sending a second multi-source download provider list to the second client when the authentication on the second client succeeds; and
receiving, by the second client, the second part that is of the target object and that is sent by the first server.

4. The method according to claim 3, wherein the method further comprises:
sending, by the second server, a second token to the second client when the authentication on the second client succeeds; and
before receiving the first part that is of the target object and that is sent by the first client, the method further comprises:
sending, by the second client, the second token to the first client;
sending, by the first client, the second token to the second server;
performing, by the second server, verification on the second token, and sending a second verification success message to the first client when the verification succeeds; and
after receiving the second verification success message, sending, by the first client, the first part that is of the target object to the second client.

5. The method according to any one of claims 1 to 4, wherein
the first server is configured to grant the first client first permission for obtaining the seed file and second permission for obtaining the target object, wherein the first permission is lower than the second permission.

6. The method according to any one of claims 1 to 5, wherein the first server comprises a metadata server and a user data server, and the target object comprises metadata and user data, wherein the metadata is stored in an object storage device managed by the metadata server, and the user data is stored in an object storage device managed by the user data server.

7. The method according to claim 6, wherein the seed file comprises the metadata of the target object.

8. The method according to any one of claims 1 to 7, wherein sending, by the first server, the seed file to the first client based on the seed obtaining request comprises:
creating, by the first server, the seed file for the target object based on the seed obtaining request, and sending the seed file to the first client.

9. The method according to any one of claims 1 to 8, wherein sending, by the second server, the first multi-source download provider list to the first client based on the first multi-source download provider obtaining request comprises:
performing, by the second server, authentication on the first client based on the first multi-source download provider obtaining request, and sending the first multi-source download provider list to the first client when the authentication on the first client succeeds.

10. An object download method, wherein the method is applied to an object storage system, the object storage system comprises a first client, a second client, a first server, and a second server, an object storage service is deployed on the first server, the first server and the second server are a same server or different servers, and the method comprises:
sending, by the first client, a first seed obtaining request to the object storage service on the first server, wherein the first seed obtaining request is used to request a seed file of a target object;
receiving the seed file sent by the first server based on the first seed obtaining request;
sending a first multi-source download provider obtaining request to the second server based on the seed file, wherein the first multi-source download provider obtaining request is used to request to provide, for the first client, a list of clients that are capable of performing multi-source download on the target object;
receiving a first multi-source download provider list sent by the second server based on the first multi-source download provider obtaining request, wherein the first multi-source download provider list comprises the second client; and
receiving a first part that is of the target object and that is sent by the first server, and receiving a second part that is of the target object and that is sent by the second client.

11. An object download method, wherein the method is applied to an object storage system, the object storage system comprises a first client, a second client, a first server, and a second server, an object storage service is deployed on the first server, the first server and the second server are a same server or different servers, and the method comprises:
receiving, by the first server, a first seed obtaining request sent by the first client, wherein the first seed obtaining request is used to request a seed file of a target object;
receiving a second seed obtaining request sent by the second client, wherein the second seed obtaining request is used to request the seed file of the target object;
separately sending the seed file to the first client and the second client;
sending a first part that is of the target object to the first client; and
sending a second part that is of the target object to the second client.

12. An object download method, wherein the method is applied to an object storage system, the object storage system comprises a first client, a second client, a first server, and a second server, an object storage service is deployed on the first server, the first server and the second server are a same server or different servers, and the method comprises:
receiving, by the second server, a seed file of a target object sent by the first server, and establishing a multi-source download provider list based on the seed file;
receiving a first multi-source download provider obtaining request sent by the first client, and adding the first client to the multi-source download provider list, wherein the first multi-source download provider obtaining request is used to request to provide, for the first client, a list of clients that are capable of downloading the target object; and
sending a first multi-source download provider list to the first client based on the first multi-source download provider obtaining request, wherein the first multi-source download provider list comprises the second client, and the first multi-source download provider list belongs to the multi-source download provider list.

13. An object storage system, wherein the object storage system comprises a first client, a second client, a first server, and a second server, an object storage service is deployed on the first server, and the first server and the second server are a same server or different servers, wherein
the first client is configured to send a first seed obtaining request to the object storage service on the first server, wherein the first seed obtaining request is used to request a seed file of a target object;
the first server is configured to send the seed file to the first client based on the first seed obtaining request;
the first client is configured to send a first multi-source download provider obtaining request to the second server based on the seed file, wherein the first multi-source download provider obtaining request is used to request to provide a list of at least one client that downloads the target object;
the second server is configured to send a first multi-source download provider list to the first client based on the first multi-source download provider obtaining request, wherein the first multi-source download provider list comprises the second client; and
the first client is configured to receive a first part that is of the target object and that is sent by the first server, and receive a second part that is of the target object and that is sent by the second client.

14. The system according to claim 13, wherein
the second server is further configured to send a first token to the first client when authentication on the first client succeeds;
the first client is further configured to send the first token to the second client;
the second client is further configured to send the first token to the second server;
the second server is further configured to perform verification on the first token, and send a first verification success message to the second client when the verification succeeds; and
the second client is further configured to: after receiving the first verification success message, send the second part that is of the target object to the first client.

15. The system according to claim 14, wherein
the second client is configured to send a second seed obtaining request to the first server, wherein the second seed obtaining request is used to request the seed file of the target object;
the second client is configured to run the seed file, and send a second multi-source download provider obtaining request to the second server, wherein the second multi-source download provider obtaining request is used to request to provide the list of the at least one client that downloads the target object;
the second server is configured to perform authentication on the second client based on the second multi-source download provider obtaining request, and send a second multi-source download provider list to the second client when the authentication on the second client succeeds, wherein the second multi-source download provider list comprises the first client; and
the second client is configured to receive the second part that is of the target object and that is sent by the first server.

16. The system according to claim 15, wherein
the second server is further configured to send a second token to the second client when the authentication on the second client succeeds;
the second client is further configured to send the second token to the first client;
the first client is further configured to send the second token to the second server;
the second server is further configured to perform verification on the second token, and send a second verification success message to the first client when the verification succeeds; and
the first client is further configured to: after receiving the second verification success message, send the first part that is of the target object to the second client.

17. The system according to any one of claims 13 to 16, wherein
the first server is configured to grant the first client first permission for obtaining the seed file and second permission for obtaining the target object, wherein the first permission is lower than the second permission.

18. The system according to any one of claims 13 to 17, wherein the first server comprises a metadata server and a user data server, and the target object comprises metadata and user data, wherein the metadata is stored in an object storage device managed by the metadata server, and the user data is stored in an object storage device managed by the user data server.

19. The system according to claim 18, wherein the seed file comprises the metadata of the target object.

20. The system according to any one of claims 13 to 19, wherein
the first server is configured to create the seed file for the target object based on the seed obtaining request, and send the seed file to the first client.

21. The system according to any one of claims 13 to 20, wherein
the second server is configured to perform authentication on the first client based on the first multi-source download provider obtaining request, and send the first multi-source download provider list to the first client when the authentication on the first client succeeds.

22. A first client, wherein the first client belongs to an object storage system, the object storage system further comprises a second client, a first server, and a second server, cloud computing comprises the first server and the second server, an object storage service is deployed on the first server, the first server and the second server are a same server or different servers, and the first client comprises:
a sending unit, configured to send a first seed obtaining request to the object storage service on the first server, wherein the first seed obtaining request is used to request a seed file of a target object; and
a receiving unit, configured to receive the seed file sent by the first server based on the first seed obtaining request, wherein
the sending unit is configured to send a first multi-source download provider obtaining request to the second server based on the seed file, wherein the first multi-source download provider obtaining request is used to request to provide, for the first client, a list of clients that are capable of performing multi-source download on the target object;
the receiving unit is configured to receive a first multi-source download provider list sent by the second server based on the first multi-source download provider obtaining request, wherein the first multi-source download provider list comprises the second client; and
the receiving unit is configured to receive a first part that is of the target object and that is sent by the first server, and receive a second part that is of the target object and that is sent by the second client.

23. A first server, wherein the first server belongs to an object storage system, the object storage system further comprises a first client, a second client, and a second server, an object storage service is deployed on the first server, the first server and the second server are a same server or different servers, and the first server comprises:
a receiving unit, configured to receive a first seed obtaining request sent by the first client, wherein the first seed obtaining request is used to request a seed file of a target object, wherein
the receiving unit is further configured to receive a second seed obtaining request sent by the second client, wherein the second seed obtaining request is used to request the seed file of the target object; and
a sending unit, configured to separately send the seed file to the first client and the second client, wherein
the sending unit is further configured to send a first part that is of the target object to the first client; and
the sending unit is further configured to send a second part that is of the target object to the second client.

24. A second server, wherein the second server belongs to an object storage system, the object storage system further comprises a first client, a second client, and a first server, an object storage service is deployed on the first server, the first server and the second server are a same server or different servers, and the second server comprises:
a receiving unit, configured to receive a seed file of a target object sent by the first server, and establish a multi-source download provider list based on the seed file, wherein
the receiving unit is further configured to receive a first multi-source download provider obtaining request sent by the first client, and add the first client to the multi-source download provider list, wherein the first multi-source download provider obtaining request is used to request to provide, for the first client, a list of clients that are capable of downloading the target object; and
a sending unit, configured to send a first multi-source download provider list to the first client based on the first multi-source download provider obtaining request, wherein the first multi-source download provider list comprises the second client, and the first multi-source download provider list belongs to the multi-source download provider list.

25. A computer device, wherein the computer device comprises a memory, a processor, and a computer program that is stored in the memory and executable on the processor, and when executing the computer program, the processor implements the method according to any one of claims 1 to 9.

26. A computing cluster, wherein the computing cluster comprises a plurality of computer devices, each of the plurality of computer devices comprises a memory, a processor, and a computer program that is stored in the memory and executable on the processor, and when executing the computer program, the processor implements the method according to claims 1 to 9.

27. A computer program product comprising instructions, wherein when the instructions are executed by a computing device cluster, the computing device cluster is caused to perform the method according to claims 1 to 9.

28. A computer-readable storage medium, wherein the computer-readable storage medium stores computer instructions, and when the computer instructions are executed on a computer device, the computer device is caused to perform the method according to any one of claims 1 to 9.
